# EUROPÄISCHE PATENTSCHRIFT

(11) **EP 1 335 158 B1**
(45) Veröffentlichungstag und Bekanntmachung des Hinweises auf die Patenterteilung: **10.08.2005**
(21) Anmeldenummer: 03001165.4
(22) Anmeldetag: 21.01.2003
(51) Int. Cl.: F16K 1/226

(54) **Klappenventil für Brennstoffaggregate**
Butterfly valve for a fuel device
Soupape à papillon pour un dispositif de carburant

(30) Priorität: 06.02.2002 DE 10204787
(43) Veröffentlichungstag der Anmeldung: 13.08.2003
(73) Patentinhaber: Pierburg GmbH, 41460 Neuss (DE)
(72) Erfinder: Haushälter, Peter, 41065 Mönchengladbach (DE); Benra, Michael, 58456 Witten (DE); Lappan, Rolf, 50733 Köln (DE); Nowak, Martin, 51399 Burscheid (DE)
(74) Vertreter: von Kirschbaum, Alexander, Dipl.-Ing.

(56) Entgegenhaltungen:
- GB-A- 2 121 513
- US-A- 3 650 508
- US-A- 4 195 815

## Beschreibung

Die Erfindung betrifft ein Klappenventil für Brennstoffaggregate, die insbesondere in Kraftfahrzeugen eingesetzt werden.

Brennstoffaggregate für Kraftfahrzeuge weisen eine Brennstoffzelle auf, in der üblicherweise unter Einsatz von Wasserstoff und Sauerstoff elektrische Energie erzeugt wird. Ggf. ist der Brennstoffzelle ein Reformer vorgeschaltet. Mit Hilfe des Reformers kann aus herkömmlichen Kraftstoffen, wie Benzin, Diesel oder Methanol, Wasserstoff gewonnen werden, der sodann der Brennstoffzelle zugeführt wird. Durch das Vorschalten eines Reformers können Brennstoffaggregate in Kraftfahrzeugen eingesetzt werden, ohne dass eine flächendeckende Versorgung mit Wasserstoff gewährleistet sein muss. Zwischen dem Reformer und der Brennstoffzelle sind im Allgemeinen regelbare Ventile erforderlich, um der Brennstoffzelle die entsprechenden Menge an Sauerstoff und Wasserstoff zuführen zu können. Bei derartigen, beispielsweise als Klappenventile ausgebildeten Ventilen handelt es sich beispielsweise um Drosselklappen, die als Regel- oder Abschaltventile oder auch als Bypassventile dienen. Klappenventile sind ferner auch erforderlich, wenn das Brennstoffaggregat keinen Reformer aufweist, sondern der Brennstoffzelle der Wasserstoff aus einem Wasserstofftank zugeführt wird. Die Ventile sind sodann zwischen dem Wasserstofftank und der Brennstoffzelle angeordnet.

Bei Brennstoffaggregaten ist es erforderlich, dass die verwendeten Ventile einen Strömungskanal äußerst dicht abschließen können. Dies ist beispielsweise bei dem Einsatz von Wasserstoff erforderlich, da bereits Wasserstoff-Luft-Gemische bei geringen Anteilen Wasserstoff explodieren können. Sehr hohe Dichtigkeiten der Ventile sind ferner erforderlich, da es sich bei Wasserstoff um ein dünnflüssiges Gas, d.h. ein Gas mit sehr kleinen Molekülen, handelt.

Aus US 3,650,508 ist ein Klappenventil bekannt mit einer Klappe, die innerhalb eines Strömungskanals angeordnet ist. Zum Schwenken der Klappe ist mit der Klappe eine Welle verbunden. Mit einer Kanalwand des Klappenventils ist eine Dichtung verbunden, die eine Drucktasche aufweist, die mit dem Strömungskanal in Verbindung steht. Die Dichtung weist zwei Dichtlippen auf, die im geschlossenen Zustand der Klappe an der Klappe anliegen.

Aufgabe der Erfindung ist es, ein Klappenventil für Brennstoffaggregate zu schaffen, mit dem ohne hohe Verstellkräfte eine hohe Dichtigkeit erzielt werden kann.

Die Lösung der Aufgabe erfolgt erfindungsgemäß durch die Merkmale des Anspruchs 1.

Das erfindungsgemäße Klappenventil für Brennstoffaggregate, insbesondere für in Kraftfahrzeugen eingesetzte Brennstoffaggregate, die eine Brennstoffzelle und ggf. einen Reformer oder einen Wasserstofftank o.dgl. aufweisen, weist eine innerhalb eines Strömungskanals angeordnete Klappe auf. Die Dichtung weist zwei der Klappe zugewandte Flächen auf, die erfindungsgemäß unter einem Winkel miteinander verbunden sind, durch den sich eine in den Strömungskanal weisende spitze ergibt, wobei eine der Flächen eine Anlage fläche zur Anlage an der Klappe ist.

Die Klappe ist mit einer Welle verbunden. Durch Betätigen der Welle kann die Klappe in dem vorzugsweise runden Strömungskanal geschwenkt werden. Hierzu ist die Welle beispielsweise mit einem elektrischen Antriebsmodul mit geeigneter Lageerkennung verbunden. Je nach Stellung der Klappe kann eine Regelung des Massenstroms oder ein Verschließen des Kanals erfolgen.

Zum dichten Verschließen des Kanals weist das Klappenventil eine mit der Kanalwand verbundene Dichtung auf. Die Dichtung ist vorzugsweise umlaufend, so dass die Klappe gegenüber der Kanalwand an ihrem gesamten Umfang abgedichtet ist. Die Dichtung weist mindestens eine mit dem Strömungskanal in Verbindung stehende Drucktasche auf. Erfindungsgemäß weist die Dichtung einen der Klappe zugewandten Bereich auf, der im Querschnitt pfeilförmig ist. Hierzu weist die Dichtung genau eine Anlagefläche und zur Klappe beabstandete, radial verlaufende Flächen auf. Der in der Drucktasche herrschende Druck führt dazu, dass die Dichtung teilweise in den Strömungskanal hineingedrückt wird. Dies hat bei geschlossener Klappe zur Folge, dass die Dichtung bzw. die Anlagefläche der Dichtung stärker an die Klappe gedrückt wird und somit die Dichtigkeit erhöht wird. Da die Dichtigkeit des erfindungsgemäßen Klappenventils auf Grund des Vorsehens einer Drucktasche in der Dichtung, die durch den anliegenden Druck des Strömungsmediums zum radialen Verschieben der Dichtung bzw. zum Andrücken der Dichtung an die Klappe erfolgt, kann mit geringer Kraftaufwendung eine sehr hohe Dichtigkeit erzielt werden. Bei herkömmlichen Dichtungen, bei denen eine Dichtfläche gegen eine Dichtung gedrückt wird, können hohe Dichtigkeiten nur dadurch erzielt werden, dass die Dichtfläche mit großer Kraft gegen die Dichtung gedrückt wird. Die Dichtwirkung wird bei dem erfindungsgemäßen Klappenventil durch den anstehenden Druck des Strömungsmediums verstärkt. Hohe Verstellkräfte sind bei den erfindungsgemäßen Klappenventilen daher nicht erforderlich, so dass sich mit einem geringen Drehmoment die Klappe schließen und öffnen läßt.

Auf Grund der hohen erzielbaren Dichtigkeit des erfindungsgemäßen Klappenventils kann bei geringem Kraftaufwand ein einfach ansteuerbares Klappenventil auch bei Brennstoffaggregaten eingesetzt werden, bei denen dünnflüssige und/oder hochexplosive Gase eingesetzt werden.

Vorzugsweise sind der Strömungskanal sowie die Klappe aus korrosionsbeständigem Material, insbesondere Edelstahl 1.4435 oder höherer Güte, hergestellt. Die Dichtung ist vorzugsweise aus einem elastischen Material, insbesondere aus einem Elastomer wie Fluorkautschuk, hergestellt. Dies hat den Vorteil, dass Wasserstoff und das ggf. in dem Medium vorhandene deionisierte Wasser, bei denen es sich um hochkorrosive Stoffe handelt, die insbesondere bei hohen Temperaturen und hohen Drücken eine hohe Korrosivität aufweisen, auch über lange Zeiträume durch derartige Strömungskanäle geleitet werden können, ohne dass das erfindungsgemäße Klappenventil beschädigt wird. Die auftretenden Temperaturen können zwischen -35 °C bis 100 °C schwanken, wobei Druckdifferenzen von etwa 2 bar auftreten können. Das erfindungsgemäße Klappenventil weist somit eine hohe Lebensdauer von bis zu 6000 h und mehr auf.

Bei einer besonders bevorzugten Ausführungsform der Erfindung weist die Dichtung mindestens zwei mit dem Strömungskanal verbundene Drucktaschen auf. Die beiden Öffnungen der Drucktaschen sind in entgegengesetzter Richtung ausgerichtet. Somit wird je nach Strömungsrichtung des Mediums in dem Strömungskanal stets in einer der beiden Drucktaschen Druck erzeugt. Es ist somit sichergestellt, dass auch bei einer Umkehr der Strömungsrichtung die Dichtung beim Verschließen des Strömungskanals dicht an der Klappe anliegt.

Besonders bevorzugt ist es, die Dichtung durch einen Klemmring in einer Ausnehmung der Kanalwand zu fixieren. Hierbei kann der Klemmring beispielsweise in einer der Drucktaschen angeordnet oder, beispielsweise bei einer elastomeren Dichtung, von Kunststoff umspritzt sein, so dass der Klemmring innerhalb der Dichtung angeordnet ist. Durch das Vorsehen eines Klemmrings ist die Dichtung auch bei starken Druckdifferenzen zwischen den beiden Seiten der Klappe sicher in der Ausnehmung gehalten. Hohe Druckdifferenzen treten beispielsweise bei sehr kleinen Massenströmen, d.h. nur geringfügig geöffneter Klappe, auf. Hierbei muss sichergestellt sein, dass die Dichtung nicht in den Strömungskanal gezogen wird.

Nachfolgend wird die Erfindung anhand einer bevorzugten Ausführungsform unter Bezugnahme auf die anliegenden Zeichnungen näher erläutert.

Es zeigen:
- Fig. 1: eine schematische Schnittansicht eines Bypassventils und
- Fig. 2: eine vergrößerte Ansicht des Bereichs II in Fig. 1.

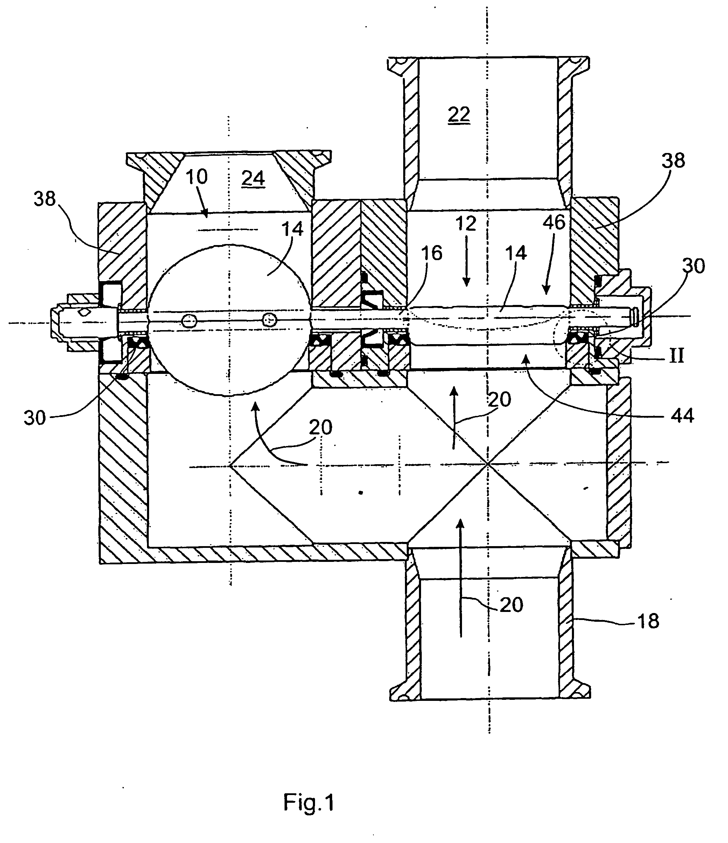

In Fig. 1 ist als Beispiel der Verwendung des erfindungsgemäßen Klappenventils ein Bypassventil dargestellt. Ein entsprechendes Klappenventil kann auch als Absperr- und Regelventil in einem durchgehenden Strömungskanal angeordnet sein.

Das Bypassventil weist zwei miteinander verbundene Klappenventile 10,12 auf. Jedes Klappenventil weist eine Klappe 14 auf, die über eine gemeinsame Welle 16 miteinander verbunden sind. Die beiden Klappen 14 sind unter einem Winkel von 90° zueinander angeordnet. Im dargestellten Ausführungsbeispiel strömt das Medium durch einen Zuführkanal 18 in Strömungsrichtung 20. Bei der dargestellten Klappenstellung ist ein erster Strömungskanal 22 geschlossen und ein zweiter Strömungskanal 24 geöffnet, so dass das Medium durch den zweiten Strömungskanal 24 strömt. Zum Schalten der beiden Klappenventile ist die gemeinsame Welle 16 mit einem nicht dargestellten elektrischen Antriebsmodul verbunden. Bei einem Bypassventil handelt es sich üblicherweise um ein Antriebsmodul, das die Welle 16 derart dreht, dass stets einer der beiden Strömungskanäle 22,24 offen und der andere geschlossen ist. Insbesondere bei einem als Drosselklappe o.dgl. dienenden Klappenventil, das nur eine einzige Klappe aufweist, ist das elektrische Antriebsmodul derart ausgebildet, dass die Winkellage der Klappe äußerst fein geregelt werden kann.

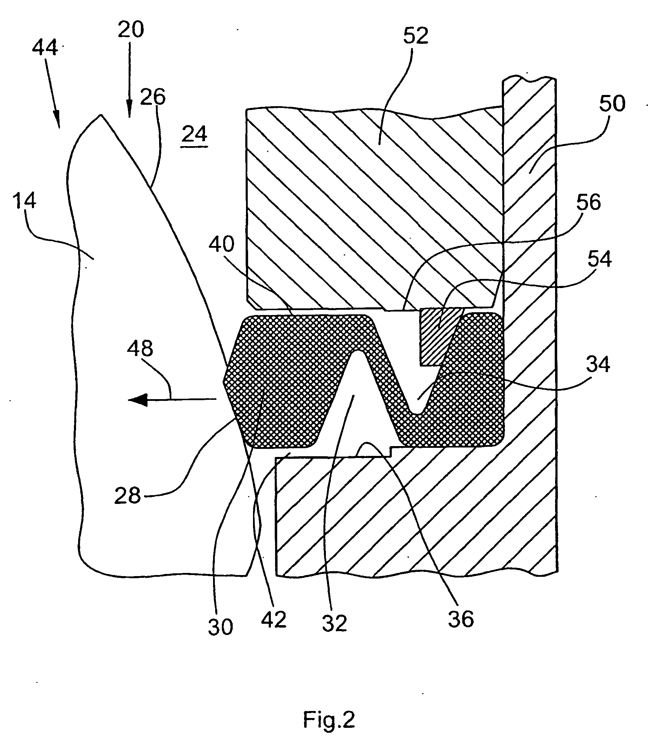

Bei den verwendeten Klappen 14 handelt es sich vorzugsweise um sphärisch ausgebildete Klappen, beispielsweise um Kugelsegmente. Hierdurch ist eine Anlagefläche 26 der Klappe 14, an der eine Anlagefläche 28 einer Dichtung 30 anliegt (Fig. 2), ausgebildet. Die Dichtung 30 liegt somit an einer Außenfläche der Klappe 14 an, so dass das Dichten in radialer Richtung erfolgt. Die Welle 16 ist vorzugsweise außerhalb der Mittelebene der Klappe 14 angeordnet. Durch diese bevorzugte Formgestaltung der Klappe sowie einer derartigen Anordnung der Welle kann eine sehr gute Abdichtung sowie eine gute Regelung des Massenstroms realisiert werden.

Die Dichtung 30, bei der es sich vorzugsweise um eine ringförmige, den gesamten Strömungskanal 22,24 umgebende Dichtung handelt, weist zwei einander gegenüberliegende Drucktaschen 32,34 auf. Die Taschen 32,34 sind ebenfalls kreisringförmig und erstrecken sich über den gesamten Umfang des Dichtrings 30. Die Dichtung 30 ist in einer Ausnehmung 36 einer Kanalwand 38, die rohrförmig ausgebildet ist und den Strömungskanal 24 bzw. 22 bildet, angeordnet. Hierbei sind vorzugsweise mindestens zwei Drittel der Breite der Dichtung 30 innerhalb der Ausnehmung 36 angeordnet.

Der Dichtring 30 ist in Hauptströmungsrichtung 20 vor der Welle 16 angeordnet. Dies hat den Vorteil, dass ein gutes Dichten bei der üblichen Strömung erzielt werden kann. Die Hauptströmungsrichtung ist diejenige Strömung, in der das Medium transportiert wird.

Die beiden Drucktaschen 32,34 sind in radialer Richtung, d.h. senkrecht zur Kanalwand 38, hintereinander angeordnet, so dass eine innere Tasche 32 und eine äußere Tasche 34 ausgebildet ist. Die Abmessungen der Ausnehmung 36 in der Kanalwand 38 ist bzgl. der axialen Breite der Dichtung 30 derart gewählt, dass zwei Kanäle 40,42 ausgebildet sind. Die beiden Kanäle 40,42 sind mit dem Strömungskanal 24 verbunden. Hierdurch herrscht in den Taschen 32,34 stets der Druck, der auch in dem Strömungskanal 24 herrscht. Bei geschlossener Klappe 14 (Fig. 1) herrscht auf einer Seite 44 der Klappe 14, die mit Druck beaufschlagt ist, gegenüber der gegenüberliegenden Seite 46 Überdruck. Mit der Überdruckseite 44 des Strömungskanals 24 ist die äußere Tasche 34 über den Kanal 40 verbunden.

Durch die Anordnung der Dichtung 30 in der Ausnehmung 36 weist die Dichtung in den beiden Spalten 40,42 eine glatte Fläche auf, die bei einer radialen Verschiebung der Dichtung 30 in Richtung des Pfeils 48 als Gleitflächen dienen.

Bei geschlossener Klappe herrscht in einer oder beiden Kammern 32,34 ein Druck, durch den die Dichtung 30 in Richtung des Pfeils 48, d.h. in radiale Richtung, gegen die Fläche 26 der Klappe 14 gedrückt wird. Zur leichteren Montage der Dichtung 30 weist das Gehäuse in diesem Bereich vorzugsweise zwei Teile 50,52 auf.

Ferner ist erfindungsgemäß ein vorzugsweise aus einem Federstahl o.dgl. bestehender Klemmring 54 vorgesehen. Der Klemmring 54 ist im dargestellten Ausführungsbeispiel in der äußeren Drucktasche 34 angeordnet und dient dazu, die Dichtung 30 in der Ausnehmung 36 zu halten. Dies ist insbesondere bei geringem Öffnungswinkel der Klappe 14 und hierbei entstehenden großen Sogwirkungen erforderlich, um zu verhindern, dass die Dichtung 30 in den Strömungskanal 24 gezogen wird. Zum Halten des Klemmrings 54 ist an dem Gehäuseteil 52 eine Nase bzw. ein Ansatz 56 vorgesehen, an dem der Klemmring 54 abgestützt ist. Der Ansatz ist vorzugsweise kreisringförmig.

## Patentansprüche

1. Klappenventil für Brennstoffaggregate, mit
einer innerhalb eines Strömungskanals (22,24) angeordneten Klappe (14),
einer mit der Klappe (14) verbundenen Welle (16) zum Schwenken der Klappe (14) und
einer mit einer Kanalwand (38) verbundenen Dichtung (30), die mindestens eine mit dem Strömungskanal (22,24) in Verbindung stehende Drucktasche (32,34) aufweist,
**dadurch gekennzeichnet, dass**
die Dichtung (30) zwei der Klappe (14) zugewandte Flächen aufweist, die unter einem Winkel miteinander verbunden sind, durch den sich eine in den Strömungskanal (22, 24) weisende Spitze ergibt, wobei eine der Flächen eine Anlagefläche (28) zur Anlage an der Klappe (14) ist.

2. Klappenventil nach Anspruch 1, **dadurch gekennzeichnet, dass** die Dichtung (30) mindestens zwei mit dem Strömungskanal (22,24) verbundene Drucktaschen (32,34) aufweist, deren Öffnungen in entgegengesetzte Richtung weisen.

3. Klappenventil nach Anspruch 1 oder 2, **dadurch gekennzeichnet, dass** die Dichtung (30) in Hauptströmungsrichtung (20) vor der Welle (16) angeordnet ist.

4. Klappenventil nach Anspruch 2 oder 3, **dadurch gekennzeichnet, dass** die beiden Drucktaschen (32,34) in radialer Richtung (48) hintereinander angeordnet sind.

5. Klappenventil nach einem der Ansprüche 2-4, **dadurch gekennzeichnet, dass** eine äußere Drucktasche (34) mit der Überdruckseite (44) verbunden ist.

6. Klappenventil nach einem der Ansprüche 1-5, **dadurch gekennzeichnet, dass** die Dichtung (30) teilweise innerhalb einer in der Kanalwand (28) vorgesehenen Ausnehmung (36) angeordnet ist.

7. Klappenventil nach einem der Ansprüche 1-6, **gekennzeichnet durch** einen die Dichtung (30) fixierenden Klemmring (54).

8. Klappenventil nach Anspruch 7, **dadurch gekennzeichnet, dass** der Klemmring (54) in einer Drucktasche (34) angeordnet ist.

9. Klappenventil nach einem der Ansprüche 1-8, **dadurch gekennzeichnet, dass** die Dichtung (30) ein elastisches Material, vorzugsweise ein Elastomer, aufweist.

## Claims

1. A flap valve for fuel aggregates, comprising:
a flap (14) arranged within a flow channel (22,24),
a shaft (16) connected to the flap (14), for pivoting the flap (14), and
a seal (30) connected with a channel wall (38), the seal (30) comprising at least one pressure pocket (32,34) communicating with the flow channel (22,24),
**characterized in that**
the seal (30) comprises two surfaces facing the flap (14) and being connected with each other at an angle, which results in a tip pointing into the flow channel (22,24), one of the surfaces being a contact surface (28) for contacting the flap (14).

2. The flap valve according to claim 1, **characterized in that** the seal (30) comprises at least two pressure pockets (32,34) connected to the flow channel (22,24), whose openings point to opposite directions.

3. The flap valve according to claim 1 or 2, **characterized in that** the seal (30) is arranged in front of the shaft (16) in the main flow direction (20).

4. The flap valve according to claim 2 or 3, **characterized in that** the two pressure pockets (32,34) are arranged one behind the other in radial direction (48).

5. The flap valve according to one of claims 2 to 4, **characterized in that** an outer pressure pocket (34) is connected to the overpressure side (44).

6. The flap valve according to one of claims 1 to 5, **characterized in that** the seal (30) is partially disposed within a recess (36) provided in the channel wall (28).

7. The flap valve according to one of claims 1 to 6, **characterized by** a clamping ring (54) fixing the seal (30).

8. The flap valve according to claim 7, **characterized in that** the clamping ring (54) is disposed in a pressure pocket (34).

9. The flap valve according to one of claims 1 to 8, **characterized in that** the seal (30) comprises an elastic material, preferably an elastomer.

## Revendications

1. Soupape à papillon pour groupes à carburant, comprenant
- un clapet (14) disposé à l'intérieur d'un conduit d'écoulement (22, 24),
- un arbre (16) assemblé avec le clapet (14) pour le pivotement du clapet (14) et
- un joint (30) assemblé avec une paroi de conduit (38), qui présente au moins une poche de pression (32, 34) en liaison avec le conduit d'écoulement (22, 24),
**caractérisée en ce que**
le joint (30) présente deux surfaces tournées vers le clapet (14), qui sont assemblées entre elles sous un angle qui forme une pointe dirigée dans le conduit d'écoulement (22, 24), l'une des surfaces étant une surface de contact (28) pour l'appui sur le clapet (14).

2. Soupape à papillon suivant la revendication 1, **caractérisée en ce que** le joint (30) présente au moins deux poches de pression (32, 34), reliées au conduit d'écoulement (22, 24) et dont les ouvertures sont dirigées en sens contraire.

3. Soupape à papillon suivant l'une des revendications 1 et 2, **caractérisée en ce que** le joint (30) est disposé en amont de l'arbre (16) dans la direction d'écoulement principale (20).

4. Soupape à papillon suivant l'une des revendications 2 et 3, **caractérisée en ce que** les deux poches de pression (32, 34) sont disposées l'une derrière l'autre dans la direction radiale (48).

5. Soupape à papillon suivant l'une des revendications 2 à 4, **caractérisée en ce qu'**une poche de pression extérieure (34) est reliée au côté surpression (44).

6. Soupape à papillon suivant l'une des revendications 1 à 5, **caractérisée en ce que** le joint (30) est disposé en partie à l'intérieur d'un évidement (36) prévu dans la paroi de conduit (28).

7. Soupape à papillon suivant l'une des revendications 1 à 6, **caractérisée par** une bague de serrage (54) fixant le joint (30).

8. Soupape à papillon suivant la revendication 7, **caractérisée en ce que** la bague de serrage (54) est disposée dans une poche de pression (34).

9. Soupape à papillon suivant l'une des revendications 1 à 8, **caractérisée en ce que** le joint (30) présente un matériau élastique, de préférence un élastomère.
